Europäisches Patentamt

European Patent Office

Office européen des brevets

(19)

(11) Publication number: **0 113 322**
**A2**

# (12) EUROPEAN PATENT APPLICATION

(21) Application number: **83830240.4**

(22) Date of filing: **28.11.83**

(51) Int. Cl.³: **G 11 B 15/66**

(30) Priority: **02.12.82 IT 64382**

(43) Date of publication of application:
**11.07.84 Bulletin 84/28**

(84) Designated Contracting States:
**AT BE CH DE FR GB LI LU NL SE**

(71) Applicant: **LENCO ITALIA - S.p.A.**
**Via del Guazzatore, 207**
**I-60027 Osimo (AN)(IT)**

(72) Inventor: **Persiani, Luigi**
**Via F.lli Cervi, 10**
**Osimo (AN)(IT)**

(74) Representative: **Baldi, Claudio**
**Viale della Vittoria 97**
**I-60035 Jesi (Ancona)(IT)**

(54) **Mechanical device for stopping the magnetic cassette during ejection from cassette players and recorders.**

(57) The instant invention relates to a mechanical device which, by means of a hooking action, instantly stops the magnetic cassette during its ejection from those cassette players and recorders where the cassette is inserted and slotted longitudinally into a window provided on the front of the set.

It basically consists of a hooking projection, of varying rigidity, designed to flex in contrast to the cassette during the insertion of said cassette, and to hook onto it during its ejection.

EP 0 113 322 A2

./...

Croydon Printing Company Ltd.

FIG.1

- 1 -

Mechanical device for stopping the magnetic  cassette during ejection from cassette players and recorders.

This application for Industrial Patent has for its object a mechanical device which, by means of a hooking action, instantly stops the magnetic cassette during its ejection from those cassette players and recorders where the cassette is inserted and slotted longitudinally into a window provided on the frontsof the set.

The herein described stopping device in comparison with mechanical solutions proposed to date, is characterized by its extreme simplicity both structurally and constructively as well as kinematically.

This simplicity derives to a large extent from the structure of the hooking projection which is designed to catch hold of the cassette, and although initially obstructing the cassette as it is being inserted, yields to the opposing force and flexes, thus allowing the insertion of the complete cassette.

It will be understood that the provision of a hooking element of varying rigidity, characterized by an elastic projection which flexes on contact with the cassette being inserted, allows for the elimination of any kind of mechanism, often complex and contrived but nevertheless necessary, which are found in present-day sets.

Said mechanisms are provided to release the braking action thus freeing the track along which the cassette slides longitudinally.

The structural simplicity of this invention also means a low production cost in that the mounting and assembly of the pieces require only a small amount of labour as they just basically concern the hooking projection, since the other components of the kinematic chain are an integral part of the already existing recording-playing mechanism of the sets.

The accompanying drawings are for a clearer illustration and exemplify one embodiment of the herein described invention, wherein:

- fig. 1 is the hooking projection in plan according to the instant invention;

- fig. 2 illustrates the position of the aforesaid hooking projection while the cassette is being inserted;

- fig. 3 illustrates the position of the aforesaid hooking projection after the complete insertion of the cassette and during playing;

- fig. 4 illustrates the position of the aforesaid hooking projection during the stopping phase of the cassette in the process of being ejected;

- fig. 5 illustrates the position of the aforesaid hooking projection during the extraction of the cassette;

- fig. 6 is a view of the front edge of a normal magnetic cassette.

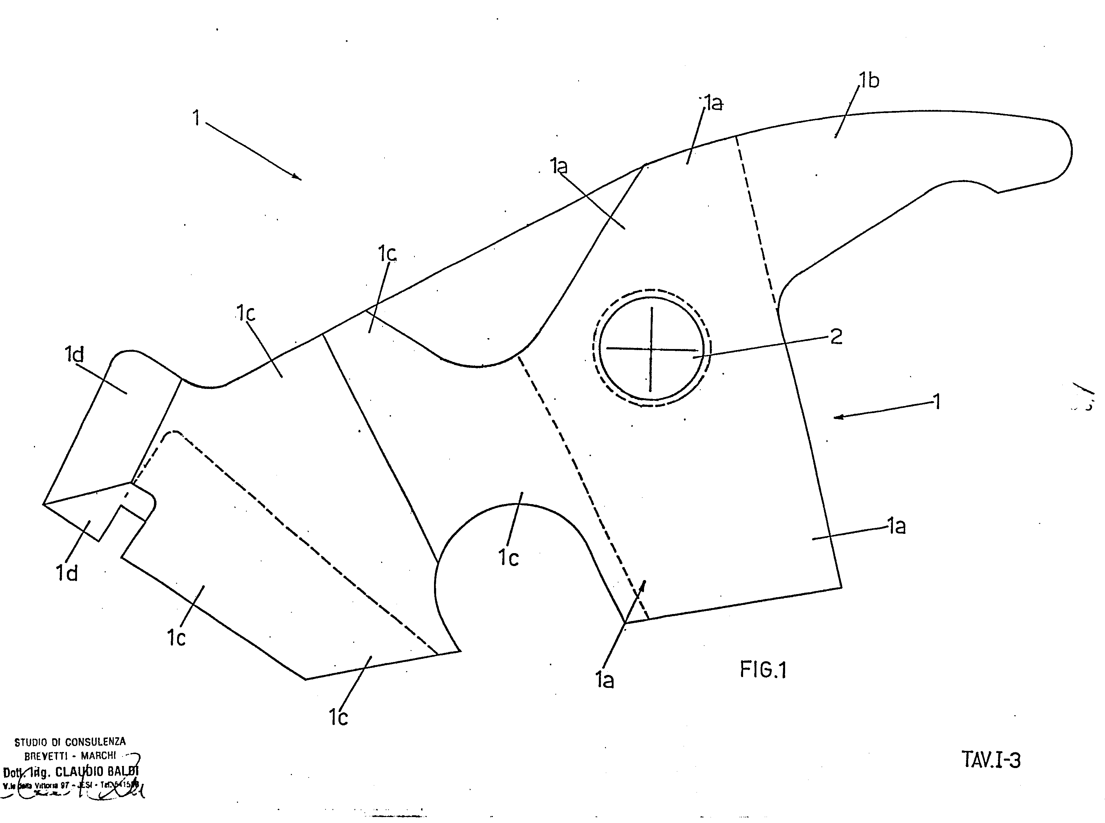

With reference to figure 1 the hooking projection consists of a thin, suitably shaped lamina, moulded in plastic of varying rigidity, characterized by an indeformable central area (1a), roughly rectangular in shape, provided with the hole (2) for the fulcrum of the hooking projection (1), and from which protrudes a slightly thicker projection (1b) with a curved tip.

On the opposite side to the aforesaid curve-tipped projection, the central area (1a) is adjacent to a thinner flexible area (1c), which tapering, ends in a small blunt tooth (1d) with slanting edges.

The dotted line indicates the differences in level, not seen in figure 1, between the areas of varying thickness.

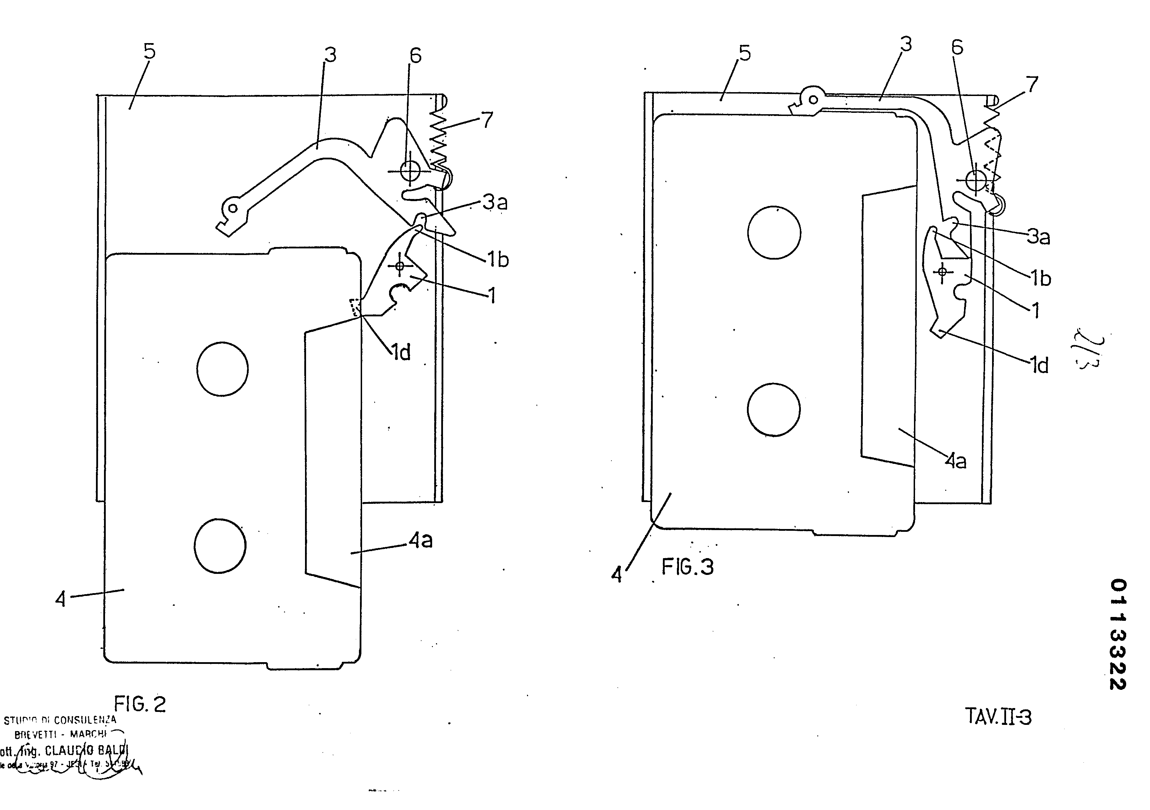

Having described the structural aspects of the hooking projection (1) we shall now examine the ways in which the braking device acts upon the cassette, in accordance with the instant invention, with reference to figures 2, 3, 4 and 5, wherein, for the sake of clearness, only the ejector (3), the hooking projection (1), the magnetic cassette (4) with its longitudinal track (5) have been illustrated.

All the other numerous structural details present in the mechanism of an everyday cassette player and recorder have been omitted.

With reference to figure 2 it can be seen that on inserting the magnetic cassette (4) into the playing track (5), it is initially guided by appropriately placed projections and passes over the tooth (1d), just touching it, immediately afterwards, however, this tooth comes sharply into contact with the flat rib (4a) provided on the edge and both the sides of the cassette.

Meeting such resistance the tooth (1d) yields, flexing downwards and deforming the whole thinner area (1c) of the hooking projection (1).

It should be noted that the tooth has been purposely blunted in order to facilitate and ensure its flexing action thus eliminating any danger of the cassette stopping and jamming against the tooth during insertion.

As the insertion of the cassette continues, it frontally meets the ejector arm (3) which moves backwards and rotates, forced by the advancing cassette.

The rotation of the ejector (3) around its own fulcrum (6) brings about the progressive and complete retraction of the tooth (1d) from the track (5), in that an appropriate notch (3a), provided on the edge of the ejector lever (3), houses and hooks onto the curved tip of the projection (1b), thus rotating the hooking projection (1).

It should be noted that the retraction of the tooth from the track is essential in order to lower the cassette into the playing position.

It should be understood that in figure 3, in relation to figure 2, the hooking projection has been moved sideways towards the cassette (4), in fact the tip of the projection (1b) no longer appears to be inserted into the aforesaid notch (3a).

This configuration, indeed, refers to the moment immediately following the insertion of the cassette (4), and that is, after a special

0113322

mechanism has lowered the cassette into the playing position simultaneous with the advance of the playing head, the support plate of which anchors the hooking projection's (1) pivot.

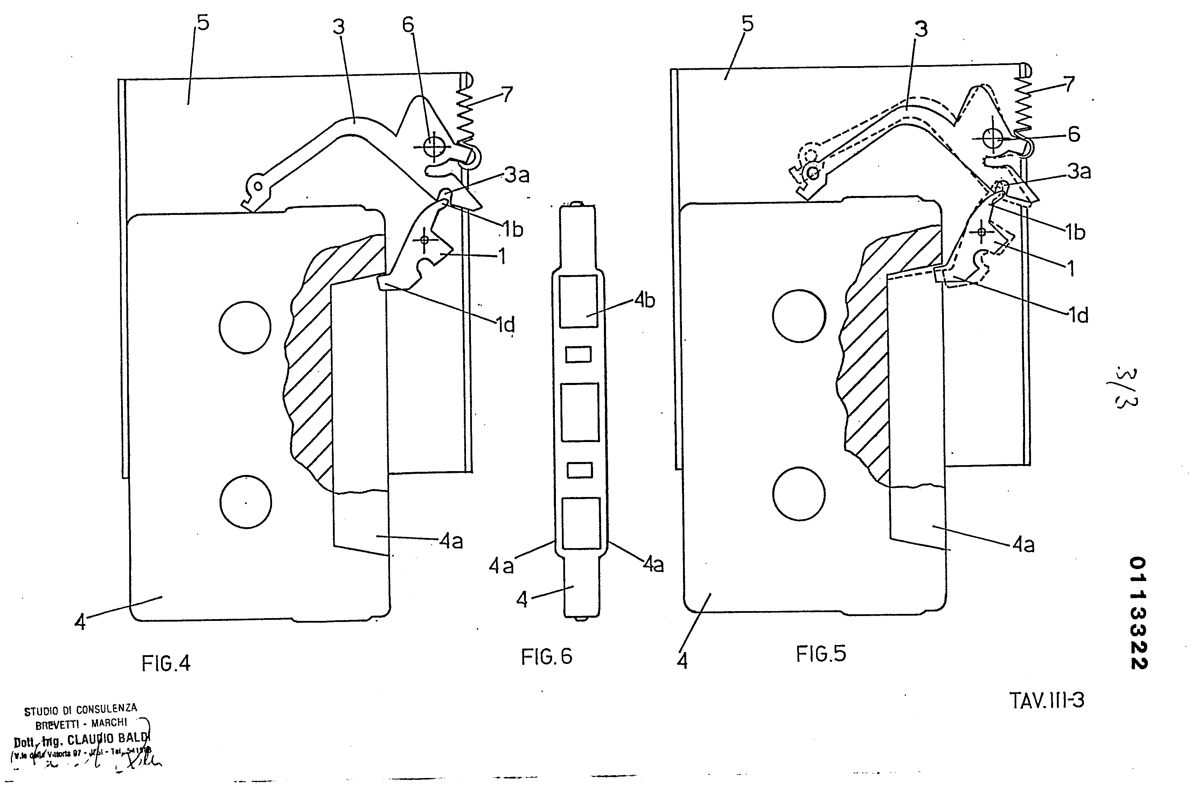

With reference to figure 4 it can be noted that as the cassette is being ejected, following the raising of the aforesaid cassette and the stopping of the playing head, the tip of the projection (1b) hooks into the notch (3a) of the ejector (3).

Said ejector (3) pushed by the spring (7) rotates the hooking projection (1) causing the tooth (1d) to jut out onto the track (5) just in time to catch hold of the raised edge of the last window (4b) of the cassette (4) which is thus instanteneously stopped.

The complete removal of the cassette, in fact, requires a slight force on the part of the user, following which the tooth (1d) is pushed out of the track (5) by the edge of the aforementioned window (4b), with the consequent rotation of the hooking projection (1).

Said projection (1) in turn rotates the ejector lever (3) due to the already mentioned action of coupling of the notch (3a) and the curved tip of the projection (1b).

In this last phase of ejection the spring (7) of the ejector lever, in slight traction, resists the rotation of the hooking projection and the simultaneous and consequent rotation of the ejector.

STUDIO DI CONSULENZA
BREVETTI - MARCHI
Dott. Ing. CLAUDIO BALDI
V.K COLLY TON STILLES, - Tel. 541563

- 1 -

Claims

1) Mechanical device for the instant stopping of magnetic cassettes during ejection from cassette players and recorders, characterized by a hooking projection comprising a thin, suitably shaped lamina, moulded in plastic of varying rigidity, with an indeformable central area, roughly rectangular in shape, provided with the hole for the fulcrum of said hooking projection, and from which protrudes a slightly thicker projection with a curved tip. Said central area is on the opposite side to the aforesaid curve-tipped projection and adjacent to a thinner, flexible area which tapering, ends in a small blunt tooth with slanting edges.

2) Mechanical device for the instant stopping of magnetic cassettes during ejection from cassette players and recorders, characterized by the aforesaid hooking projection which is pivoted on an appropriate pin protruding from the support platform of the playing head.

3) Mechanical device for the instant stopping of magnetic cassettes during ejection from cassette players and recorders, characterized by the fact that the aforesaid hooking projection has a slightly curved tip which is housed, inside a notch provided at the edge of the ejector lever, in such a way that when said lever rotates it also rotates the hooking projection and viceversa.

4) Mechanical device for the instant stopping of magnetic cassettes during ejection from cassette players and recorders, characterized by the fact that during the insertion of the magnetic cassette the tooth of the aforesaid hooking projection comes sharply into contact with the flat rib provided on the edge and both sides of the cassette;

meeting such resistance the tooth flexes downwards and with it the whole of the thinner area of the hooking projection.

5) Mechanical device for the instant stopping of magnetic cassettes during ejection from cassette players and recorders, characterized by the fact that during the ejection of the cassette, the ejector lever, always on account of the aforesaid coupling of the notch, provided on the ejector lever, and the curved tip, rotates the hooking of the cas sette, in the process of being ejected, just in time to hook onto the last window of the cassette which is thus instantaneously stopped.

6) Mechanical device for the instant stopping of magnetic cassette players and recorders, characterized by the aforesaid tooth which, during the removal of the cassette which requires slight force on the part of the user, is pushed out of the track by the edge of the aforesaid window with the consequent rotation of the hooking projection and the ejector lever, coupled together as described above, overcoming the restraining action of the ejector lever spring.

STUDIO DI CONSULENZA
BREVETTI - MARCHI
Dott. Ing. CLAUDIO BALDI
V.K. de a v.:.:.e BA CES. Tel. 541588

FIG.1

TAV.I-3

0113322

2/3

FIG.3

FIG.2

TAV.II-3

FIG.4

FIG.6

FIG.5

3/3

0113322

TAV.III-3